# EUROPÄISCHE PATENTSCHRIFT

(11) **EP 1 704 317 B1**
(45) Veröffentlichungstag und Bekanntmachung des Hinweises auf die Patenterteilung: **02.01.2008**
(21) Anmeldenummer: 05701485.4
(22) Anmeldetag: 11.01.2005
(51) Int. Cl.: F02D 41/20, F02D 41/34, F02D 41/40

(54) **REGELUNGSVERFAHREN UND REGELUNGSEINRICHTUNG FÜR EINEN AKTOR**
CONTROL METHOD AND CONTROL DEVICE FOR AN ACTUATOR
PROCEDE DE REGULATION ET DISPOSITIF DE REGULATION POUR UN ACTIONNEUR

(30) Priorität: 12.01.2004 DE 102004001676
(43) Veröffentlichungstag der Anmeldung: 27.09.2006
(73) Patentinhaber: Siemens VDO Automotive AG, 93055 Regensburg (DE)
(72) Erfinder: SCHÜRZ, Willibald, 93188 Pielenhofen (DE); WAGNER, Joachim, 92345 Dietfurt a.d. Altmühl (DE)
(86) Internationale Anmeldenummer: PCT/EP2005/050096
(87) Internationale Veröffentlichungsnummer: WO 2005/066478

(56) Entgegenhaltungen:
- EP-A- 1 138 909
- WO-A-03/081007
- DE-A1- 10 311 540
- DE-A1- 19 930 309

## Beschreibung

Die Erfindung betrifft ein Regelungsverfahren für einen Aktor eines Injektors einer Einspritzanlage für eine Brennkraftmaschine gemäß dem Oberbegriff des Anspruchs 1 sowie eine entsprechende Regelungseinrichtung gemäß dem Oberbegriff des Anspruchs 11.

In modernen Einspritzanlagen für Brennkraftmaschinen werden die Injektoren zunehmend durch Piezoaktoren angesteuert, die im Vergleich zu herkömmlichen elektromagnetischen Aktoren ein dynamischeres Stellverhalten aufweisen. Die einzelnen Piezoaktoren werden hierbei entsprechend einem vorgegebenen Einspritzbeginn (engl. SOI - Start of Injection) zu einem bestimmten Triggerzeitpunkt mit einer bestimmten Aktorenergie angesteuert, um den gewünschten Einspritzbeginn einzustellen. Hierbei ist zu beachten, dass die Kraftübertragung von dem Piezoaktor auf die Ventilnadel des Injektors verzögerungsbehaftet ist, so dass zwischen dem Triggerzeitpunkt des elektrischen Steuersignals für den Piezoaktor und dem anschließenden Einspritzbeginn eine bauartspezifische Verzögerungszeit liegt. Die EP-A-1138909 zeigt eine solche Einspritzanlage.

Problematisch hierbei ist die Tatsache, dass die Verzögerungszeit zwischen dem Triggerzeitpunkt des elektrischen Steuersignals für den Aktor und dem anschließenden Einspritzbeginn aufgrund von mechanischen und elektrischen Toleranzen Schwankungen unterliegt, was zu Fehlern bei der Einstellung des Einspritzbeginns führen kann.

Der Erfindung liegt deshalb die Aufgabe zugrunde, ein Regelungsverfahren und eine entsprechende Regelungseinrichtung zu schaffen, um mechanische und elektrische Toleranzen der Verzögerungszeit zwischen dem Triggerzeitpunkt des elektrischen Steuersignals für den Aktor und dem anschließenden Einspritzbeginn auszuregeln.

Diese Aufgabe wird durch ein Regelungsverfahren gemäß Anspruch 1 und durch eine Regelungseinrichtung gemäß Anspruch 11 gelöst.

Die Erfindung umfasst die allgemeine technische Lehre, die bei der Ansteuerung des Aktors aufgebrachte Aktorenergie einzustellen, um den Einspritzbeginn auf einen vorgegebenen Sollwert einzuregeln. Falls beispielsweise der tatsächliche Einspritzbeginn zeitlich nach dem vorgegebenen Sollwert für den Einspritzbeginn liegt, so wird die Aktorenergie im Rahmen der erfindungsgemäßen Regelung vorzugsweise erhöht, um den tatsächlichen Einspritzbeginn zeitlich vorzuverlegen. Falls der tatsächliche Einspritzbeginn dagegen zeitlich vor dem Sollwert für den Einspritzbeginn liegt, so wird die Aktorenergie im Rahmen der erfindungsgemäßen Regelung vorzugsweise verringert, um den Einspritzbeginn zeitlich nach hinten zu verlegen.

Vorzugsweise erfolgt die Regelung gemeinsam für mehrere Aktoren, indem die Aktorenergie gemeinsam für mehrere Aktoren eingestellt wird. Beispielsweise kann die Aktorenergie für sämtliche Aktoren einer Brennkraftmaschine im Rahmen der erfindungsgemäßen Regelung gemeinsam eingestellt werden, um den gewünschten Einspritzbeginn zu erreichen. Es ist jedoch alternativ auch möglich, dass die Brennkraftmaschine mehrere Zylinderbänke aufweist, wobei die Aktorenergie für die Aktoren einer Zylinderbank jeweils gemeinsam eingestellt wird.

Die gemeinsame Einstellung der Aktorenergie für mehrere Aktoren bietet den Vorteil, dass eine kostengünstige Endstufe (LC statt CC) eingesetzt werden kann.

Bei der gemeinsamen Einstellung der Aktorenergie für mehrere Aktoren können im Rahmen der Energieregelung naturgemäß keine aktorspezifischen Abweichungen berücksichtigt werden. Bei einer Einstellung der Aktorenergie gemeinsam für mehrere Aktoren besteht das Regelungsziel deshalb vorzugsweise darin, die mittlere Soll-Ist-Abweichung des Einspritzbeginns über die einzelnen Aktoren zu minimieren. Im Rahmen des erfindungsgemäßen Regelungsverfahrens wird deshalb vorzugsweise die mittlere Soll-Ist-Abweichung des Einspritzbeginns für die gemeinsam angesteuerten Injektoren ermittelt, wobei die Einstellung der Aktorenergie in Abhängigkeit von der ermittelten Soll-Ist-Abweichung erfolgt.

Es ist jedoch im Rahmen der Erfindung auch möglich, dass die Regelung individuell für jeweils einen von mehreren Aktoren erfolgt, wobei die Aktorenergie jeweils aktorspezifisch eingestellt wird. Eine derartige individuelle Einstellung der Aktorenergie bietet den Vorteil, dass auch aktorspezifische Abweichungen berücksichtigt werden können.

Bei der vorstehend beschriebenen gemeinsamen Einstellung der Aktorenergie für mehrere Aktoren können aktorspezifische Abweichungen dadurch berücksichtigt werden, dass zusätzlich zu der Energieregelung auch der Triggerzeitpunkt des elektrischen Steuersignals für die Aktoren aktorindividuell eingestellt wird. Die erfindungsgemäße Regeleinrichtung weist deshalb vorzugsweise zwei Regelschleifen auf, wobei die eine Regelschleife die Aktorenergie kollektiv für mehrere Aktoren einstellt, während die andere Regelschleife den Triggerzeitpunkt des elektrischen Steuersignals aktorindividuell einstellt. Beide Regelschleifen gehen hierbei vorzugsweise von der Soll-Ist-Abweichung des Einspritzbeginns aus.

Die Bestimmung des Ist-Wertes des Einspritzbeginns kann im Rahmen der Erfindung beispielsweise mittels eines Sitzkontaktschalters erfolgen, der die Düsennadelstellung des Injektors erfasst. Derartige Sitzkontaktschalter sind dem Fachmann bekannt und werden deshalb in der folgenden Beschreibung nicht näher erläutert.

Ferner ist zu erwähnen, dass die Einstellung der Aktorenergie im Rahmen der erfindungsgemäßen Regelung zeitdiskret und/oder wertdiskret erfolgen kann. Bei einer zeitdiskreten Einstein lung der Aktorenergie erfolgt die Änderung der Aktorenergie vorzugsweise diskontinuierlich zwischen aufeinander folgenden Einspritzvorgängen, wobei die Aktorenergie jeweils nach einem oder mehreren Einspritzvorgängen neu eingestellt werden kann. Bei einer wertdiskreten Einstellung der Aktorenergie erfolgt dagegen eine diskontinuierliche gestufte Einstellung der Aktorenergie, was beispielsweise bei Digitalreglern ohnehin üblich ist.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Fig. 1: ein regelungstechnisches Ersatzschaltbild einer erfindungsgemäßen Regelungseinrichtung für mehrere Piezoaktoren einer Einspritzanlage für eine Brennkraftmaschine sowie
- Fig. 2: ein regelungstechnisches Ersatzschaltbild eines alternativen Ausführungsbeispiels.

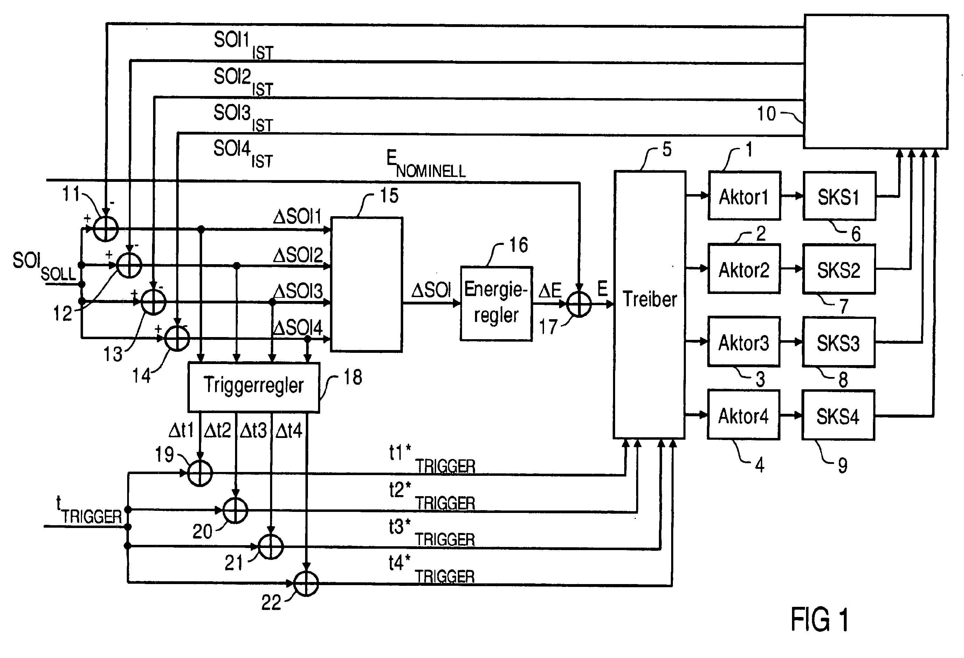

Das regelungstechnische Ersatzschaltbild in Figur 1 verdeutlicht das erfindungsgemäße Regelungsverfahren für vier Piezoaktoren 1-4, die in jeweils einem Injektor einer Einspritzanlage die Bewegung der jeweiligen Ventilnadel steuern.

Die elektrische Ansteuerung der Piezoaktoren 1-4 erfolgt hierbei durch eine Treiberschaltung 5, die herkömmlich ausgebildet sein kann und deshalb hier nicht weiter beschrieben wird.
Den einzelnen Piezoaktoren 1-4 ist hierbei jeweils ein Sitzkontaktschalter 6-9 zugeordnet, wobei die einzelnen Sitzkontaktschalter 6-9 die Stellung der Ventilnadel der von den Piezoaktoren 1-4 angesteuerten Injektoren erfassen.

Ausgangsseitig sind die Sitzkontaktschalter 6-9 mit einer Auswertungseinheit 10 verbunden, die aus den Ausgangssignalen der Sitzkontaktschalter 6-9 den tatsächlichen Einspritzbeginn SOI1_{IST}, SOI2_{IST}, SOI3_{IST}, SOI4_{IST} der einzelnen Injektoren ermittelt.

Eingangsseitig erhält die erfindungsgemäße Regelungseinrichtung einen Sollwert SOI_{SOLL} für den Einspritzbeginn, wobei der Sollwert SOI_{SOLL} beispielsweise durch ein mehrdimensionales Kennfeld ermittelt werden kann, das hier zur Vereinfachung nicht dargestellt ist und beispielsweise in der elektronischen Motorsteuerung (ECU - Electronic Control Unit) realisiert sein kann. Als Eingangsgrößen für die Bestimmung des Sollwertes SOI_{SOLL} kann das mehrdimensionale Kennfeld beispielsweise Betriebsgrößen, wie die Drehzahl oder die mechanische Last, der Brennkraftmaschine berücksichtigen.

Der vorgegebene Sollwert SOI_{SOLL} wird zusammen mit den IST-Werten SOI1_{IST}, SOI2_{IST}, SOI3_{IST}, bzw. SOI4_{IST} jeweils einem Subtrahierer 11, 12, 13, 14 zugeführt, wobei die Subtrahierer 11-14 jeweils eine Soll-Ist-Abweichung ΔSOI1, ΔSOI2, ΔSOI3 bzw. ΔSOI4 berechnen. Die Soll-Ist-Abweichungen ΔSOI1, ΔSOI2, ΔSOI3 und ΔSOI4 geben hierbei jeweils an, um welche Zeitspanne der tatsächliche Einspritzbeginn SOI1_{IST}, SOI2_{IST}, SOI3_{IST} bzw. SOI4_{IST} der von den Piezoaktoren 1-4 angesteuerten Injektoren von dem vorgegebenen Sollwert SOI_{SOLL} abweicht.

Die Soll-Ist-Abweichungen ΔSOI, ΔSOI2, ΔSOI3 und ΔSOI4 der einzelnen Injektoren werden einer Recheneinheit 15 zugeführt, die einen Mittelwert ΔSOI der einzelnen Soll-Ist-Abweichungen ΔSOI1, ΔSOI2, ΔSOI3 und ΔSOI4 berechnet.

Dieser Mittelwert ΔSOI wird dann einem Energieregler 16 zugeführt, der in Abhängigkeit von dem Mittelwert ΔSOI einen Korrekturwert ΔE bestimmt, um den Mittelwert ΔSOI zu minimieren, wie noch beschrieben wird.

Ausgangsseitig ist der Energieregler 16 mit einem Addierer 17 verbunden, der als zusätzliche Eingangsgröße eingangsseitig einen vorgegebenen nominellen Wert E_{NOMINFLL} für die Aktorenergie erhält.

Der Addierer 17 ist ausgangsseitig mit der Treiberschaltung 5 verbunden, die somit als Eingangsgröße die Summe aus der nominellen Aktorenergie E_{NOMINFLI.} und dem Korrekturwert ΔE erhält, woraufhin die Treiberschaltung 5 die Piezoaktoren 1-4 mit der korrigierten Aktorenergie E ansteuert. Der Energieregler 16 berechnet den Korrekturwert ΔE so, dass der Mittelwert ΔSOI der Soll-Ist-Abweichungen ΔSOI1, ΔSOI2, ΔSOI3 und ΔSOI4 minimal wird.

Hierbei ist zu erwähnen, dass die Aktorenergie E im Rahmen dieser Regelung für sämtliche Piezoaktoren 1-4 gemeinsam eingestellt wird, so dass die Treiberschaltung 5 aus einer kostengünstigen Endstufe (LC statt CC) bestehen kann.

Darüber hinaus sind die Subtrahierer 11-14 mit einem Triggerregler 18 verbunden, um die aktorspezifischen Abweichungen zwischen dem vorgegebenen Sollwert SOI_{SOLL} und den einzelnen Ist-Werten SOI1_{IST}, SOI2_{IST}, SOI3_{IST} und SOI4_{TST} auszuregeln. Der Triggerregler 18 berechnet deshalb in Abhängigkeit von den aktorspezifischen Soll-Ist-Abweichungen ΔSOI1, ΔSOI2, ΔSOI3 und ΔSOI4 Korrekturwerte Δt1, Δt2, Δt3 und Δt4 für den Triggerzeitpunkt, zu dem die elektrische Ansteuerung der Piezoaktoren 1-4 beginnt.

Ausgangsseitig ist der Triggerregler 18 mit 4 Addierern 19-22 verbunden, die die Korrekturwerte Δt1, Δt2, Δt3, Δt4 zu einem vorgegebenen Triggerzeitpunkt t_{TRIGGER} addieren und entsprechende aktorspezifische Triggerzeitpunkte t1*_{TRIGGER}, t2*_{TRIGGERP} t3*_{TRIGGER} und t4*_{TRIGGER} berechnen und diese der Treiberschaltung 5 zuführen, welche die Piezoaktoren 1-4 entsprechend ansteuert. Die erfindungsgemäße Regeleinrichtung weist also eine zweite Regelschleife auf, in der die Triggerzeitpunkte für die einzelnen Piezoaktoren 1-4 individuell eingestellt werden, wodurch aktorspezifische Abweichungen berücksichtigt werden.

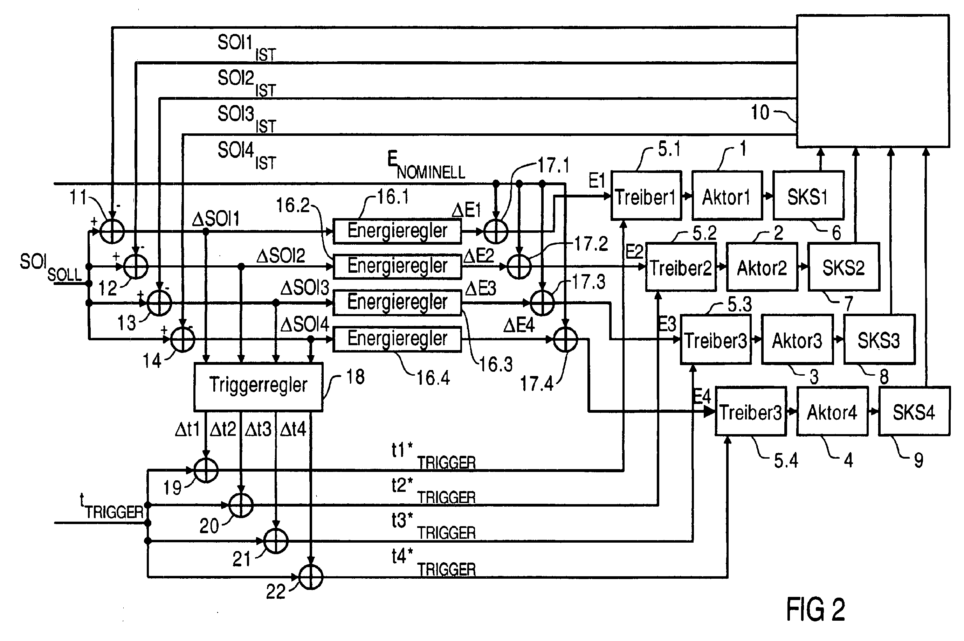

Das in Figur 2 dargestellte alternative Ausführungsbeispiel stimmt weitgehend mit dem vorstehend beschriebenen und in Figur 1 gezeigten Ausführungsbeispiel überein, so dass zur Vermeidung von Wiederholungen weitgehend auf die vorstehende Beschreibung verwiesen wird und für entsprechende Bauteile im Folgenden dieselben Bezugszeichen verwendet werden.

Eine Besonderheit dieses Ausführungsbeispiels besteht darin, dass die Energieregelung ebenfalls individuell für jeden der Piezoaktoren 1-4 erfolgt.

Entsprechend sind auch vier Energieregler 16.1-16.4 und entsprechend vier nachgeschaltete Addierer 17.1-17.4 vorgesehen, wobei die Addierer 17.1-17.4 die korrigierten Aktorenergien E1, E2, E3, E4 individuell für vier Treiberschaltungen 5.1-5.4 bestimmen.

Bei diesem Ausführungsbeispiel erfolgt also sowohl eine Einstellung des Triggerzeitpunkts als auch eine Einstellung der Aktorenergie individuell für jeden der Piezoaktoren 1-4, wodurch aktorspezifische Abweichungen noch besser berücksichtigt werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Regelungsverfahren für einen Aktor (1-4) eines Injektors einer Einspritzanlage für eine Brennkraftmaschine, mit den folgenden Schritten:
- Vorgabe eines Sollwerts (SOI_{SOLL}) für den Einspritzbeginn,
- Elektrische Ansteuerung des Aktors (1-4) zu einem bestimmten Triggerzeitpunkt (T_{TRIGGER}) mit einer bestimmten Aktorenergie (E),
**gekennzeichnet durch**
folgende Schritte:
- Erfassung eines Istwerts (SOI1_{IST}, SOI2_{IST}, SOI3_{IST}, SOI4_{IST}) des Einspritzbeginns,
- Ermittlung einer Soll-Ist-Abweichung (ΔSOI1, ΔSOI2, ΔSOI3, ΔSOI4) des Einspritzbeginns,
- Einstellung der Aktorenergie (E) in Abhängigkeit von der Soll-Ist-Abweichung (ΔSOI1, ΔSOI2, ΔSOI3, ΔSOI4) des Einspritzbeginns zur Regelung des Einspritzbeginns.

2. Regelungsverfahren nach Anspruch 1,
**dadurch gekennzeichnet,**
**dass** die Regelung gemeinsam für mehrere Aktoren (1-4) erfolgt, indem die Aktorenergie (E) gemeinsam für mehrere Aktoren (1-4) eingestellt wird.

3. Regelungsverfahren nach Anspruch 2,
**gekennzeichnet durch**
folgende Schritte:
- Erfassung des Istwerts (SOI1_{IST}, SOI2_{IST}, SOI3_{IST}, SOI4_{IST}) des Einspritzbeginns individuell für die einzelnen Aktoren (1-4),
- Ermittlung der Soll-Ist-Abweichung (ΔSOI1, ΔSOI2, ΔSOI3, ΔSOI4) des Einspritzbeginns individuell für die einzelnen Aktoren (1-4),
- Ermittlung der mittleren Soll-Ist-Abweichung (ΔSOI) des Einspritzbeginns für mehrere Aktoren (1-4),
- Einstellung der Aktorenergie (E) gemeinsam für mehrere Aktoren (1-4) entsprechend der mittleren Soll-Ist-Abweichung (ΔSOI) des Einspritzbeginns.

4. Regelungsverfahren nach Anspruch 1,
**dadurch gekennzeichnet,**
**dass** die Regelung individuell für jeweils einen von mehreren Aktoren (1-4) erfolgt, wobei die Aktorenergie (E) jeweils aktorspezifisch eingestellt wird.

5. Regelungsverfahren nach Anspruch 4,
**gekennzeichnet durch**
folgende Schritte:
- Erfassung des Istwerts (SOI1_{IST}, SOI2_{IST} SOI3_{IST}, SOI4_{IST}) des Einspritzbeginns individuell für die einzelnen Aktoren (1-4),
- Ermittlung der Soll-Ist-Abweichung (ΔSOI1, ΔSOI2, ΔSOI3, ΔSOI4) des Einspritzbeginns individuell für die einzelnen Aktoren (1-4),
- Einstellung der Aktorenergie (E) individuell für die einzelnen Aktoren (1-4) in Abhängigkeit von der jeweiligen aktorspezifischen Soll-Ist-Abweichung (ΔSOI1, ΔSOI2, ΔSOI3, ΔSOI4) des Einspritzbeginns.

6. Regelungsverfahren nach einem der vorhergehenden Ansprüche,
**dadurch gekennzeichnet,**
**dass** der Triggerzeitpunkt (t_{TRIGGER}) für die Ansteuerung der Aktoren (1-4) unabhängig von der Soll-Ist-Abweichung (ΔSOI1, ΔSOI2, ΔSOI3, ΔSOI4) des Einspritzbeginns eingestellt wird.

7. Regelungsverfahren nach einem der Ansprüche 1 bis 5,
**dadurch gekennzeichnet,**
**dass** im Rahmen der Regelung zusätzlich zu der Einstellung der Aktorenergie (E) auch der Triggerzeitpunkt (T_{TRIGGFR}) in Abhängigkeit von der Soll-Ist-Abweichung (ΔSOI1, ΔSOI2, ΔSOI3, ΔSOI4) des Einspritzbeginns eingestellt wird, um den Einspritzbeginn zu regeln.

8. Regelungsverfahren nach Anspruch 7,
**dadurch gekennzeichnet,**
**dass** die Aktorenergie (E) gemeinsam für mehrere Aktoren (1-4) eingestellt wird, während der Triggerzeitpunkt individuell für die einzelnen Aktoren (1-4) eingestellt wird.

9. Regelungsverfahren nach einem der vorhergehenden Ansprüche,
**dadurch gekennzeichnet,**
**dass** der Istwert (SOI1_{IST}, SOI2_{IST}, SOI3_{IST}, SOI4_{IST}) des Einspritzbeginns mittels eines Sitzkontaktschalters (6-9) erfasst wird, wobei der Sitzkontaktschalter (6-9) eine Düsennadelstellung des Injektors erfasst.

10. Regelungsverfahren nach einem der vorhergehenden Ansprüche,
**dadurch gekennzeichnet,**
**dass** die Einstellung der Aktorenergie (E) im Rahmen der Regelung zeitdiskret und/oder wertdiskret erfolgt.

11. Regelungseinrichtung für einen Aktors (1-4) eines Injektors für eine Einspritzanlage einer Brennkraftmaschine, mit
- einem Stellglied (5, 5.1-5.4) zur elektrischen Ansteuerung des Aktors (1-4) zu einem bestimmten Triggerzeitpunkt (t_{TRIGGER}) mit einer bestimmten Aktorenergie(E),
**gekennzeichnet durch**
- eine Messeinrichtung (6-10) zur Erfassung eines Istwerts (SOI1_{IST}, SOI2_{IST}, SOI3_{IST}, SOI4_{IST}) des Einspritzbeginns,
- einen ersten Regler (16, 16.1-16.4) zur Einstellung der Aktorenergie (E) in Abhängigkeit von einer Soll-Ist-Abweichung (ΔSOI1, ΔSOI2, ΔSOI3, ΔSOI4) zwischen dem gemessenen Istwert (SOI1_{IST}, SOI2_{IST}, SOI3_{IST}, SOI4_{IST}) des Einspritzbeginns und einem vorgegebenen Sollwert (SOI_{SOLL}) des Einspritzbeginns.

12. Regelungseinrichtung nach Anspruch 11
**dadurch gekennzeichnet,**
**dass** die Aktorenergie (E) im Rahmen der Regelung für mehrere Aktoren (1-4) gemeinsam einstellbar ist.

13. Regelungseinrichtung nach Anspruch 12,
**gekennzeichnet durch**
eine Recheneinheit (15) zur Berechung eines Mittelwerts (ΔSOI) der Soll-Ist-Abweichung (ΔSOI1, ΔSOI2, ΔSOI3, ΔSOI4) des Einspritzbeginns für mehrere Aktoren (1-4), wobei der erste Regler (16) die Aktorenergie (E) für mehrere Aktoren (1-4) entsprechend dem Mittelwert (ΔSOI) einstellt.

14. Regelungseinrichtung nach Anspruch 11,
**dadurch gekennzeichnet,**
**dass** die Aktorenergie (E) im Rahmen der Regelung für mehrere Aktoren (1-4) individuell einstellbar ist.

15. Regelungseinrichtung nach einem der Ansprüche 11 bis 14,
**gekennzeichnet durch**
einen zweiten Regler (18) zur Einstellung des Triggerzeitpunkts (t_{TRIGGER}) für die Ansteuerung des Aktors (1-4) in Abhängigkeit von der Soll-Ist-Abweichung (ΔSOI1, ΔSOI2, ΔSOI3, ΔSOI4) zwischen dem gemessenen Istwert (SOI1_{IST} SOI2_{IST}, SOI3_{IST}, SOI4_{IST}) des Einspritzbeginns und dem vorgegebenen Sollwert (SOI_{SOLL}) des Einspritzbeginns.

16. Regelungseinrichtung nach einem der Ansprüche 11 bis 15,
**dadurch gekennzeichnet,**
**dass** die Messeinrichtung (6-10) einen Sitzkontaktschalter 6-9) aufweist, der eine Düsennadelstellung des Injektors erfasst.

## Claims

1. Control method for an actuator (1-4) of an injector of a fuel injection system for an internal combustion engine, which method comprises the following steps:
- specifying a target value (SOI_{SOLL}) for the start of injection, and
- electrically controlling the actuator (1-4) at a specific trigger time (T_{TRIGGER}) with a specific actuator energy (E),
**characterised by**
the following steps:
- detecting an actual value (SOI1_{IST}, SOI2_{IST}, SOI3_{IST}, SOI4_{IST}) at the start of injection,
- determining a deviation (ΔSOI1, ΔSOI2, ΔSOI3, ΔSOI4) between the target and actual values at the start of injection, and
- setting the actuator energy (E) as a function of the deviation (ΔSOI1, ΔSOI2, ΔSOI3, ΔSOI4) between the target and actual values at the start of injection for controlling the start of said injection.

2. Control method according to claim 1,
**characterised in that**
controlling takes place jointly for a plurality of actuators (1-4) by setting the actuator energy (E) jointly for a plurality of actuators (1-4).

3. Control method according to claim 2,
**characterised by**
the following steps:
- detecting the actual value (SOI1_{IST}, SOI2_{IST}, SOI3_{IST}, SOI4_{IST}) at the start of injection separately for the individual actuators (1-4),
- determining the deviation (ΔSOI1, ΔSOI2, ΔSOI3, ΔSOI4) between the target and actual values at the start of injection separately for the individual actuators (1-4),
- determining the mean deviation (ΔSOI) between the target and actual values at the start of injection for a plurality of actuators (1-4), and
- setting the actuator energy (E) jointly for a plurality of actuators (1-4) according to the mean deviation (ΔSOI) between the target and actual values at the start of injection.

4. Control method according to claim 1,
**characterised in that**
controlling takes place individually for in each case one of a plurality of actuators (1-4), with the actuator energy (E) being set in each case on an actuator-specific basis.

5. Control method according to claim 4,
**characterised by**
the following steps:
- detecting the actual value (SOI1_{IST}, SOI2_{IST}, SOI3_{IST}, SOI4_{IST}) at the start of injection separately for the individual actuators (1-4),
- determining the deviation (ΔSOI1, ΔSOI2, ΔSOI3, ΔSOI4) between the target and actual values at the start of injection separately for the individual actuators (1-4), and
- setting the actuator energy (E) separately for the individual actuators (1-4) as a function of the respective actuator-specific deviation (ΔSOI1, ΔSOI2, ΔSOI3, ΔSOI4) between the target and actual values at the start of injection.

6. Control method according to one of the preceding claims,
**characterised in that**
the trigger time (t_{TRIGGER}) for controlling the actuators (1-4) is set independently of the deviation (ΔSOI1, ΔSOI2, ΔSOI3, ΔSOI4) between the target and actual values at the start of injection.

7. Control method according to one of claims 1 to 5,
**characterised in that**
as part of controlling and in addition to setting the actuator energy (E), the trigger time (t_{TRIGGER}) is also set as a function of the deviation (ΔSOI1, ΔSOI2, ΔSOI3, ΔSOI4) between the target and actual values at the start of injection for controlling said start of injection.

8. Control method according to claim 7,
**characterised in that**
the actuator energy (E) is set jointly for a plurality of actuators (1-4) while the trigger time is set separately for the individual actuators (1-4).

9. Control method according to one of the preceding claims,
**characterised in that**
the actual value (SOI1_{IST}, SOI2_{IST}, SOI3_{IST}, SOI4_{IST}) at the start of injection is detected by means of a seat contact switch (6-9), with said seat contact switch (6-9) detecting a nozzle needle position of the injector.

10. Control method according to one of the preceding claims,
**characterised in that**
the actuator energy (E) is set within the scope of controlling on a discrete time and/or on a discrete value basis.

11. Control device for an actuator (1-4) of an injector for a fuel injection system of an internal combustion engine, which device comprises
- a controlling element (5, 5.1-5.4) for electrically controlling the actuator (1-4) at a specific trigger time (t_{TRIGGER}) with a specific actuator energy (E),
**characterised by**
- a measuring device (6-10) for detecting an actual value (SOI1_{IST}, SOI2_{IST}, SO13_{IST}, SOI4_{IST}) at the start of injection,
- a first controller (16, 16.1-16.4) for setting the actuator energy (E) as a function of a deviation (ΔSOI1, ΔSOI2, ΔSOI3, ΔSOI4) between the measured actual value (SOI1_{IST}, SOI2_{IST}, SOI3_{IST}, SOI4_{IST}) at the start of injection and a pre-specified target value (SOI_{SOLL}) at the start of injection.

12. Control device according to claim 11,
**characterised in that**
the actuator energy (E) can be set jointly within the scope of controlling for a plurality of actuators (1-4).

13. Control device according to claim 12,
**characterised by**
a computing unit (15) for calculating a mean value (ΔSOI) of the deviation (ΔSOI1, ΔSOI2, ΔSOI3, ΔSOI4) between the target and actual values at the start of injection for a plurality of actuators (1-4), with the first controller (16) setting the actuator energy (E) for a plurality of actuators (1-4) in accordance with the mean value (ΔSOI).

14. Control device according to claim 11,
**characterised in that**
the actuator energy (E) can be set individually within the scope of controlling for a plurality of actuators (1-4).

15. Control device according to one of claims 11 to 14,
**characterised by**
a second controller (18) for setting the trigger time (T_{TRIGGER}) for controlling the actuator (1-4) as a function of the deviation (ΔSOI1, ΔSOI2, ΔSOI3, ΔSOI4) between the measured actual value (SOI1_{IST}, SOI2_{IST}, SOI3_{IST}, SOI4_{IST}) at the start of injection and the pre-specified target value (SOI_{SOLL}) at the start of injection.

16. Control device according to one of claims 11 to 15,
**characterised in that**
the measuring device (6-10) has a seat contact switch 69) which detects a nozzle needle position of the injector.

## Revendications

1. Procédé de régulation pour un actionneur (1-4) d'un injecteur d'un système d'injection pour un moteur à combustion interne, comportant les étapes suivantes:
- prescription d'une valeur de consigne (SOI_{cons}) pour le début d'injection,
- commande électrique de l'actionneur (1-4) à un instant de déclenchement déterminé (t_{TRIGGER}) avec une énergie d'actionneur déterminée (E),
**caractérisé par**
les étapes suivantes:
- détection d'une valeur réelle (SOI1_{réel}, SOI2_{réel}, SOI3_{réel}, SOI4_{réel}) du début d'injection,
- détermination d'un écart consigne-réel (ΔSOI1, ΔSOI2, ΔSOI3, ΔSOI4) du début d'injection,
- réglage de l'énergie d'actionneur (E) en fonction de l'écart consigne-réel (ΔSOI1, ΔSOI2, ΔSOI3, ΔSOI4) du début d'injection pour la régulation du début d'injection.

2. Procédé de régulation selon la revendication 1,
**caractérisé en ce que**
l'on effectue la régulation en commun pour plusieurs actionneurs (1-4), en réglant l'énergie d'actionneur ((E) en commun pour plusieurs actionneurs (1-4).

3. Procédé de régulation selon la revendication 2,
**caractérisé par**
les étapes suivantes:
- détection de la valeur réelle (SOI1_{réel,} SOI2_{réel}, SOI3_{réel,} SOI4_{réel}) du début d'injection individuellement pour les actionneurs individuels (1-4),
- détermination de l'écart consigne-réel (ΔSOI1, ΔSOI2, DSOI3, ΔSOI4) du début d'injection individuellement pour les actionneurs individuels (1-4),
- détermination de l'écart consigne-réel moyen (ΔSOI) du début d'injection pour plusieurs actionneurs (1-4),
- réglage de l'énergie d'actionneur (E) en commun pour plusieurs actionneurs (1-4) selon l'écart consigne-réel moyen (ΔSOI) du début d'injection.

4. Procédé de régulation selon la revendication 1,
**caractérisé en ce que**
l'on effectue la régulation individuellement chaque fois pour un de plusieurs actionneurs (1-4), l'énergie d'actionneur (E) étant chaque fois réglée de manière spécifique aux actionneurs.

5. Procédé de régulation selon la revendication 4,
**caractérisé par**
les étapes suivantes:
- détection de la valeur réelle (SOI1_{réel}, SOI2_{réel}, SOI3_{réel}, SOI4_{réel}) du début d'injection individuellement pour les actionneurs individuels (1-4),
- détermination de l'écart consigne-réel (ΔSOI1, ΔSOI2, ΔSOI3, ΔSOI4) du début d'injection individuellement pour les actionneurs individuels (1-4),
- réglage de l'énergie d'actionneur (E) individuellement pour les actionneurs individuels (1-4) en fonction de l'écart consigne-réel respectif spécifique aux actionneurs (ΔSOI1, ΔSOI2, ΔSOI3, ΔSOI4) du début d'injection.

6. Procédé de régulation selon l'une quelconque des revendications précédentes,
**caractérisé en ce que**
l'on règle l'instant de déclenchement (t_{TRIGGER}) pour la commande des actionneurs (1-4) indépendamment de l'écart consigne-réel (ΔSOI1, ΔSOI2, ΔSOI3, ΔSOI4) du début d'injection.

7. Procédé de régulation selon l'une quelconque des revendications 1 à 5,
**caractérisé en ce que**
dans le cadre de la régulation et en plus du réglage de l'énergie d'actionneur (E), on règle également l'instant de déclenchement (t_{TRIGGER}) en fonction de l'écart consigne-réel (ΔSOI1, ΔSOI2, ΔSOI3, ΔSOI4) du début d'injection afin de réguler le début d'injection.

8. Procédé de régulation selon la revendication 7,
**caractérisé en ce que**
l'on règle l'énergie d'actionneur (E) en commun pour plusieurs actionneurs (1-4), tandis que l'on règle l'instant de déclenchement individuellement pour les actionneurs individuels (1-4).

9. Procédé de régulation selon l'une quelconque des revendications précédentes,
**caractérisé en ce que**
l'on détecte la valeur réelle (SOI1_{réel}, SOI2_{réel}, SOI3_{réel}, SOI4_{réel}) du début d'injection au moyen d'un interrupteur de contact de siège (6-9), dans lequel l'interrupteur de contact de siège (6-9) détecte une position de l'aiguille de l'injecteur.

10. Procédé de régulation selon l'une quelconque des revendications précédentes,
**caractérisé en ce que**
l'on effectue le réglage de l'énergie d'actionneur (E) de manière discrète en temps et/ou en valeur dans le cadre de la régulation.

11. Dispositif de régulation pour un actionneur (1-4) d'un injecteur pour un système d'injection d'un moteur à combustion interne, comportant
- un organe de commande (5, 5.1-5.4) pour la commande électrique de l'actionneur (1-4) à un instant de déclenchement déterminé (t_{TRIGGER}) avec une énergie d'actionneur déterminée (E),
**caractérisé par**
- un dispositif de mesure (6-10) pour détecter une valeur réelle (SOI1_{réel}, SOI2_{réel}, SOI3_{réel}, SOI4_{réel}) du début d'injection,
- un premier régulateur (16, 16.1-16.4) pour régler l'énergie d'actionneur (E) en fonction d'un écart consigne-réel (ΔSOI1, ΔSOI2, ΔSOI3, ΔSOI4) entre la valeur réelle mesurée (SOI1_{réel}, SOI2_{réel}, SOI3_{réel}, SOI4_{réel}) du début d'injection et une valeur de consigne prédéterminée (SOI_{cons}) du début d'injection.

12. Dispositif de régulation selon la revendication 11, **caractérisé en ce que**
l'énergie d'actionneur (E) est réglable en commun pour plusieurs actionneurs (1-4) dans le cadre de la régulation.

13. Dispositif de régulation selon la revendication 12, **caractérisé par**
une unité de calcul (15) pour calculer une valeur moyenne (ΔSOI) de l'écart consigne-réel (ΔSOI1, ΔSOI2, ΔSOI3, ΔSOI4) du début d'injection pour plusieurs actionneurs (1-4), dans lequel le premier régulateur (16) règle l'énergie d'actionneur (E) pour plusieurs actionneurs (1-4) selon la valeur moyenne (ΔSOI).

14. Dispositif de régulation selon la revendication 11, **caractérisé en ce que**
l'énergie d'actionneur (E) est réglable individuellement pour plusieurs actionneurs (1-4) dans le cadre de la régulation.

15. Dispositif de régulation selon l'une quelconque des revendications 11 à 14,
**caractérisé par**
un deuxième régulateur (18) pour régler l'instant de déclenchement (t_{TRIGGER}) pour la commande de l'actionneur (1-4) en fonction de l'écart consigne-réel (ΔSOI1, ΔSOI2, ΔSOI3, ΔSOI4) entre la valeur réelle mesurée (SOI1_{réel}, SOI2_{réel}, SOI3_{réel}, SOI4_{réel}) du début d'injection et la valeur de consigne prédéterminée (SOI_{cons}) du début d'injection.

16. Dispositif de régulation selon l'une quelconque des revendications 11 à 15,
**caractérisé en ce que**
le dispositif de mesure (6-10) comprend un interrupteur de contact de siège (6-9), qui détecte une position de l'aiguille de l'injecteur.
